# EUROPEAN PATENT APPLICATION

(11) **EP 2 808 713 A1**
(43) Date of publication of application: **03.12.2014**
(21) Application number: 13169870.6
(22) Date of filing: 30.05.2013
(51) Int. Cl.: G02B 6/30, G02B 6/26

(54) **System and method for fiber packaging grating-coupled photonic devices**

(71) Applicant: University College Cork - National University of Ireland, Cork, Cork (IE)
(72) Inventor: O'Brien, Peter, Co. Cork (IE); Snyder, Bradley, Cork (IE)
(74) Representative: Lucey, Michael

(57) **Abstract**

The invention provides an integrated planar optical system comprising a photonic device comprising at least one input and/or output; and an optical fibre or v-groove assembly, one end of the fiber or assembly is coupled to said photonic device. The one end of the optical fibre or assembly is shaped with a double polish angle, wherein the fibre or assembly end is polished at a first polish angle and a second polish angle to form an irregular shaped fibre or assembly tip for coupling with the photonic device.

## Description

### Field of the Invention

The invention relates to a system and method for fiber packaging grating coupled photonic devices with a quasi-planar form factor.

### Background to the Invention

Silicon-on-Insulator (SOI) technology provides a compelling platform for integration of photonic devices and circuits. It facilitates wafer-scale processing and is compatible with existing CMOS systems. The high index of refraction contrast between silicon and the surrounding air or a covering silica planarization layer allows for the specification of sub-micron waveguides. This high index contrast also decreases losses in curved waveguides and allows for small radii of curvature, further enabling the construction of compact devices.

This in turn enables an increase in the scale of integration of multiple devices. Whereas in other material systems such as doped silica and InP, in which at most a few devices can be patterned on a chip, the small size of SOI waveguides allows several to tens of devices to be patterned on a single chip. Therefore, complex optical circuits can be created without the complexity and inherent losses of coupling several individually-packaged chips.

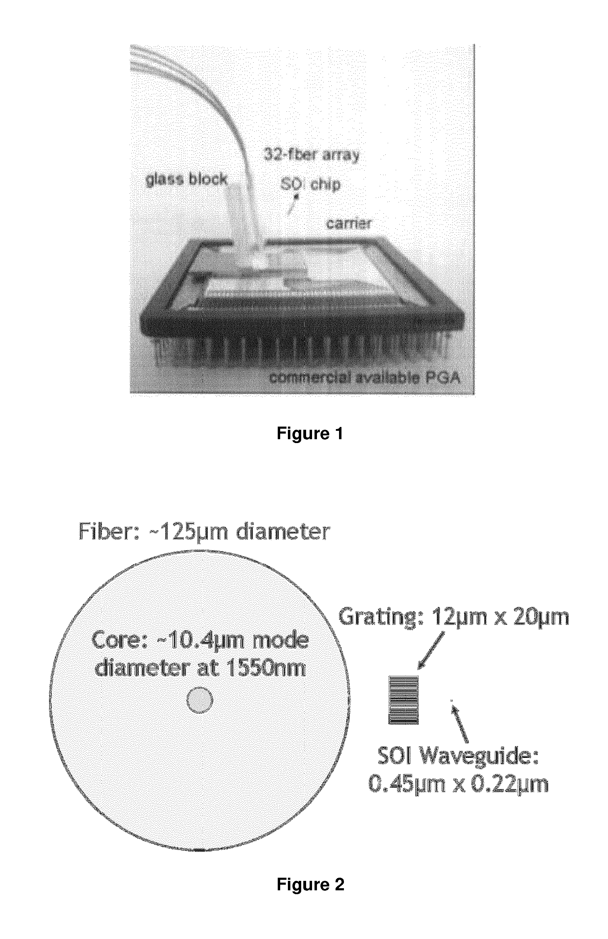

However, the small size of SOI devices presents its own challenges for device packaging. In particular, coupling of light into and out of SOI devices has proven difficult due to the small waveguide dimensions (450nmx220nm, as shown in Figure 1). In order to efficiently couple from an SOI waveguide to a standard single-mode fiber or other active device, the size and shape of the optical mode must be adapted. One method of achieving this is the use of a grating coupler.

With this in mind, there are two cases to consider for the packaging of photonic devices. The first is connecting the inputs and outputs of photonic devices to standard single mode fiber and industry standard fiber connectors. In general, this is typically achieved by using complicated alignment techniques, followed by welding or epoxying methods to affix the fiber to the device. In the case of a grating coupled device, the coupling of the fiber to the photonic device involves bringing in the fiber from the top (or near vertical) orientation to the face of the photonic device and affixing the end of the fiber to the face of the photonic device resulting in a non-planar, bulky and in some cases fragile packaging structure, for example as disclosed in Figure 2 or in http://www.luxtera.com/optophy-lux6001.html.

Moreover, in cases where the entire device is enclosed in epoxy, there is no way to make further electrical or optical connections or to connect precise heating elements, temperature monitors and other device requirements or enhancements.

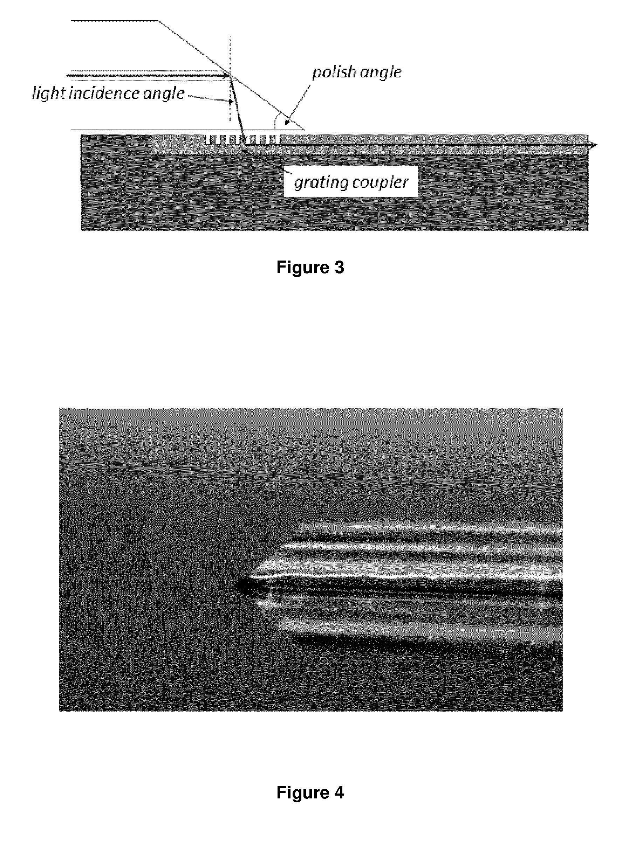

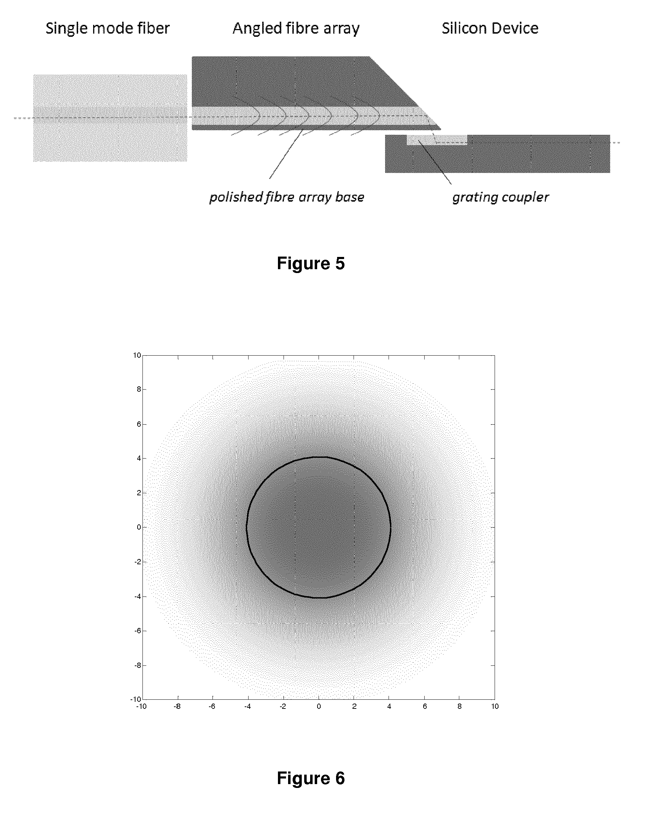

An alternative approach is to implement a fully planar design, where the total internal reflection at the end fiber facet is used to transmit the optical field into the grating coupler at the required angle of incidence, see Figure 3. This required angle of incidence sets the angle of the fibre facet which consists of a single polished facet configuration. The fibre can be attached through epoxy or suspended over the grating with an air gap between fibre and grating coupler. Figure 4 shows the fibre attached to the grating coupler using epoxy. This configuration can also be implemented for fiber arrays, where the fibres are located in an array of v-grooves and the array end facet is polished in a similar manner to the single fiber design. A key problem with this planar design is the difficultly in bringing the fiber core close to the grating coupler without causing scattering losses associated with the evanescent field of the fiber mode, as illustrated in Figure 5 and 6. A loss of guiding can also occur if the cladding region is too thin. To avoid these problems, the fiber core must be maintained at a reasonable distance (working distance) which results in coupling losses arising from beam divergence. Furthermore, manufacture of this planar design is difficult to implement, especially for fiber arrays.

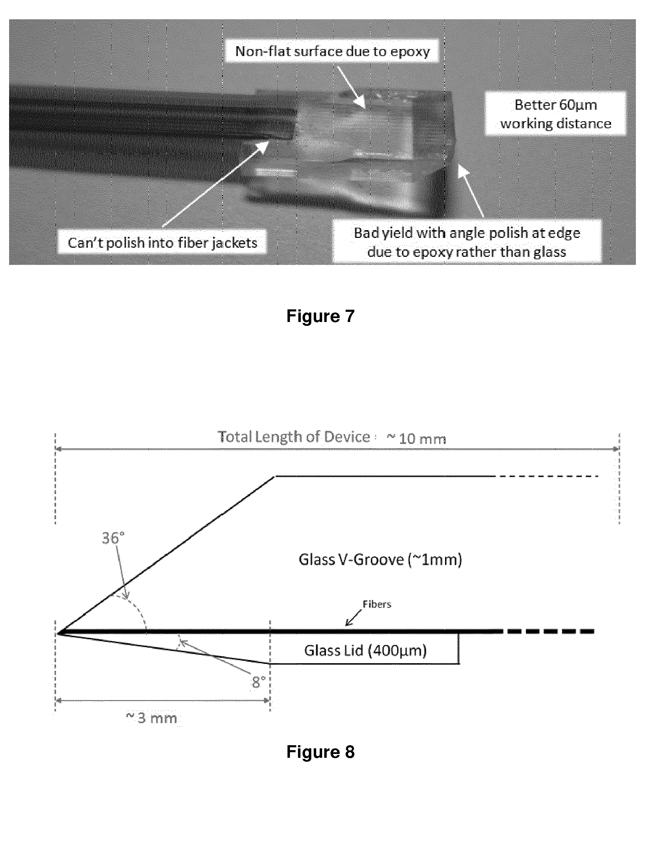

To ensure a minimum level of the coupling loss arising from beam divergence, the glass fibre array base must be thinned and polished. Firstly, this polishing process is difficult to monitor, i.e. determine the working distance. Secondly, the ribbon fibre array severely limits the ability to thin the glass fiber array base, as illustrated in Figure 7. As a result implementation of the planar design in its current form suffers from a number of technical problems.

It is therefore an object of the invention to provide a system and method to overcome the optical loss and manufacturing design issues of the above mentioned planar approach.

### Summary of the Invention

According to the invention there is provided, as set out in the appended claims, an integrated quasi-planar optical system comprising:
an optical fibre or v-groove fiber array assembly adapted at one end to couple to a photonic device;
**characterised in that**:
the one end of the optical fibre of v-groove fibre array assembly is shaped with a double polish angle, wherein the fibre or fibre array assembly end is polished at a first polish angle and a second polish angle to form an irregular shaped fibre or fibre array assembly tip for coupling with the photonic device.

In one embodiment the first polish angle is polished at an angle larger than the second polish angle.

In one embodiment the value of the first and second polish angles comprise a geometric relationship such that the guided light is directed at an angle of incidence matching the requirements of the grating coupler.

In one embodiment the first polish angle comprises an angle of approximately 36 degrees to the horizontal fibre and in contact with a fibre core and the second polish angle comprises an angle of approximately 8 degrees to the horizontal fibre and in contact with grating.

In one embodiment the value of the second polish angle and the length of that angle along the surface of the device is set at a distance between the fibre core and a grating to define a working distance.

In one embodiment the coupling loss is dependent on the distance between the fibre core and grating.

In one embodiment the working distance is selected to be approximately below 10 microns, such that the coupling loss becomes negligible during operation.

In one embodiment the photonic device comprises a grating.

In one embodiment the coupling uses a bead of epoxy to affix the fiber or fibre array assembly to said device.

In one embodiment the epoxy is applied such that the epoxy spreads using capillary action in a gap formed between the fiber or fibre array assembly and a face of the photonic device and capillary action avoids epoxy contamination of the first polish surface

In one embodiment the properties of the epoxy are selected such that the system acts as a filter with specific optical characteristics.

In one embodiment the epoxy is cured using UV light.

In another embodiment there is provided a An integrated quasi-planar optical system comprising:
an optical waveguide core adapted at one end to couple to a photonic device;
**characterised in that**:
the one end of the optical waveguide is shaped with a double polish angle, wherein the waveguide end is polished at a first polish angle and polished at a second polish angle to form an irregular angled waveguide tip for coupling with the photonic device.

In a further embodiment there is provided a method of integrating a quasi-planar optical system comprising the steps of:
coupling an optical fibre adapted at one end to couple to a photonic device;
**characterised in that**:
shaping the one end of the optical fibre with a double polish angle, wherein the fibre end is polished at a first polish angle and polished at a second polish angle to form an irregular angled fibre tip for coupling with the photonic device.

### Brief Description of the Drawings

The invention will be more clearly understood from the following description of an embodiment thereof, given by way of example only, with reference to the accompanying drawings, in which:
Figure 1 illustrates a prior art implementation of coupling a fiber to a photonic device using a vertically integrated design;
Figure 2 illustrates a comparison of Sizes of Single-Mode Fiber, Grating Coupler and SOI Waveguide;
Figure 3 illustrates a prior art schematic of coupling a fiber to a photonic device using an angled-Polish Fiber planar design;
Figure 4 illustrates a prior art implementation of coupling a fiber to a photonic device using an angled-Polish Fiber planar design;
Figure 5 illustrates a prior art schematic of fully assembled angled-Polish Fiber planar fibre array with Silicon device incorporating a grating coupler. The ribbon fibre limits the ability to minimise the working distance between the fibre core and grating and a polished fibre array can results in loss of waveguiding from the fibre core;
Figure 6 illustrates a schematic of a simulated optical field distribution inside and outside the fibre core;
Figure 7 illustrates an implementation of an angled-Polish Fiber planar design;
Figure 8 illustrates a schematic of the invention incorporating a double angle polish, according to one embodiment;
Figure 9 illustrates a schematic of the invention showing a close-up of the fibre facet incorporating a double angle polish;
Figure 10 illustrates a 3D schematic of the invention showing a full fibre array module including ribbon fibre array;
Figure 11 illustrates a graph showing how the coupling efficiency varies with working distance;
Figure 12 illustrates a 3D schematic of our invention showing introduction of the second polish angle and a known 2^{nd} polish base length can set the working distance (distance between fibre core and grating coupler); and
Figure 13 illustrates a 3D schematic showing a close-up of Figure 12.

### Detailed Description of the Drawings

The invention provides an integrated planar optical system comprising a photonic device comprising at least one input and/or output; and an optical fibre or optical fiber array in v-groove assembly. One end of the fiber is coupled to the photonic device. The one end of the optical fibre or fibre array assembly is shaped or dimensioned with a double polish angle, wherein the fibre or fibre array assembly end is polished at a first polish angle and a second polish angle to form an irregular shaped fibre or fibre array assembly tip for coupling with the photonic device.

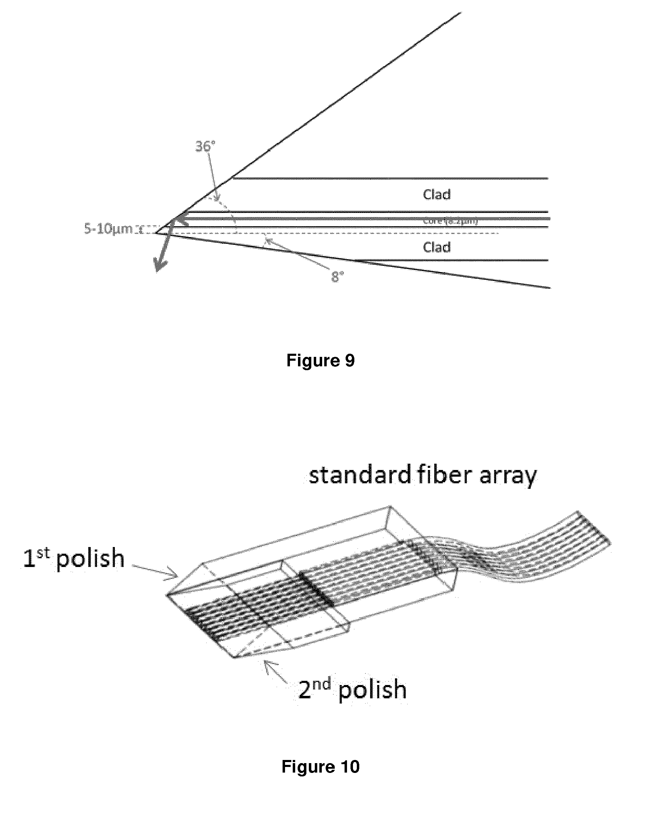

Figure 8, 9 and 10 illustrates schematics of the invention incorporating a double angle polish, according to one embodiment. The coupling comprises positioning the fiber substantially parallel to one face of the photonic device and the one end of the fibre or fibre array assembly is chamfered or polished at two positions on the fibre or fibre array assembly end- facet. In one embodiment, the first polish is at an angle of approximately 36 degrees to the horizontal fiber and in contact with the fibre core, and secondly a polish at an angle of approximately 8 degrees along the base of the device. The value of the second polish angle and the length of the second polish along the base of the device set the distance between the fibre core and the grating (working distance).

The invention introduces a second angle at the fibre facet or fibre array assembly tip that enables the fibre core to be brought into contact with a grating coupler, for example as near as five micrometers to the grating coupler. This significantly minimises coupling losses by reducing the influence of beam divergence as the optical field propagates towards the grating coupler after reflecting from the fibre end facet and exiting the fibre core.

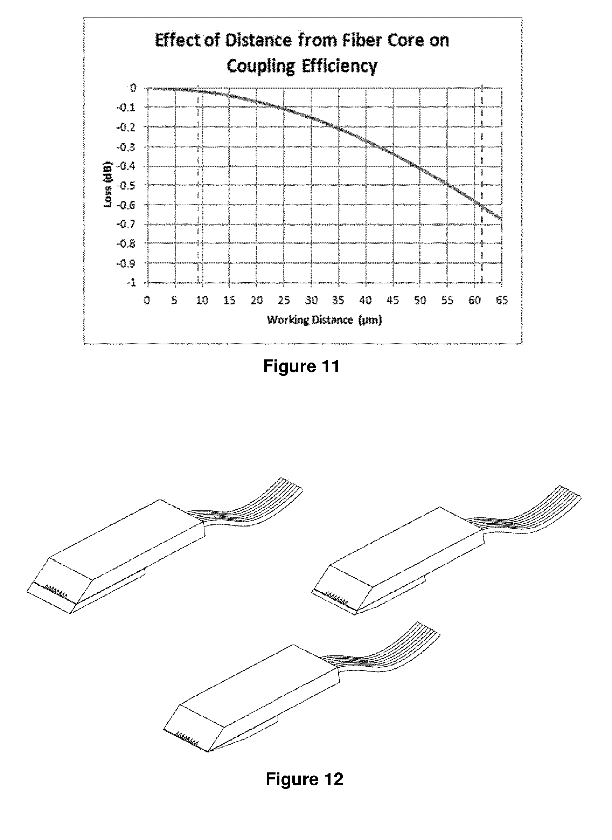

Figure 11 shows how the coupling loss depends on the distance between the fibre core and grating or the working distance. Critically, if the working distance can be reduced below 10 microns, the coupling loss becomes negligible. Furthermore, the design overcomes any issues with scattering loss, as only the cladding near the end tip of the fibre core is removed, while the bulk of the core along the fibre array is contained within an unaltered fibre cladding.

It will be appreciated that the design of the invention is also significantly easier to manufacture as only the end tip of the fibre core or assembly is thinned and polished and the limitations imposed by the ribbon fibre restricting the ability to thin and polish the glass base of the fibre array are avoided. This also enables the use of v-groove assemblies with interspersed fiber ribbon arrays that require the presence of an assembly base, such as used in the construction of fiber arrays with a 127 micrometer pitch.

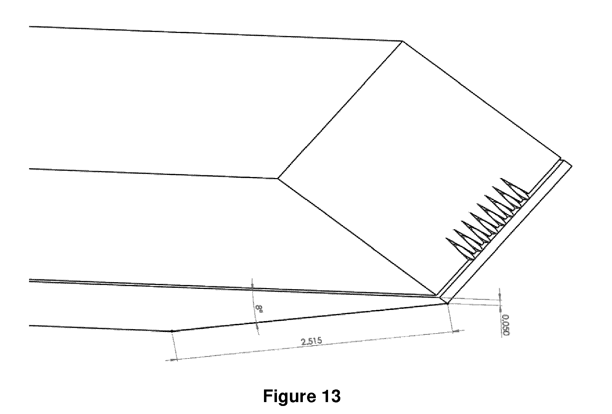

In addition, introduction of the second angle enables the working distance between the fibre core and base of the fibre array base to be easily monitored and set to any required value. To achieve this, a pre-defined second angle and pre-defined length of polished base (second polish) will exactly determine the working distance, as illustrated in Figures 12 and 13.

It will be appreciated that the length of the second polished surface multiplied by the sine of the second polish angle determines the reduction of the thickness of the base at the fiber or fibre array assembly tip. In one example, given a base of 400 micrometer thickness and an 8° second polish angle, when the length of the second polished surface is 2.515 millimeters, then the thickness at the tip has been reduced by 350 micrometers, leaving a working distance of 50 micrometers between the fibre cladding and the grating coupler, as shown in Figure 13. This enables precision monitoring of the polishing process to ensure the fibre core can be precisely positioned at a short distance to the grating while avoiding the possibility of over polishing into the core.

The fibre or fibre array assembly can be attached to the silicon grating using a clear polymer epoxy. A UV cure epoxy is normally used that has an index of refraction that matches that of the waveguide cladding region. Furthermore, capillary action induced by the thin interface between the fibre array assembly and silicon grating is used to disperse the liquid epoxy between the interface. Critically, capillary action ensures the epoxy does not contaminate the larger polished facet, ensuing the reflective properties of fibre assembly are maintained.

It will be appreciated that that in some cases, the fiber will only be polished with one angle, whereas the second polish angle will only occur at the base of the assembly, as in the second illustration of Figure 12.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. An integrated quasi-planar optical system comprising:
an optical fibre adapted at one end to couple to a photonic device;
**characterised in that**:
the one end of the optical fibre is shaped with a double polish angle,
wherein the fibre end is polished at a first polish angle and polished at a second polish angle to form an irregular angled fibre tip for coupling with the photonic device.

2. The optical system of claim 1 wherein the first polish angle is polished at an angle larger than the second polish angle.

3. The optical system of claim 2 wherein the value of the first and second polish angles comprise a geometric relationship such that the guided light is directed at an angle of incidence matching the requirements of the grating coupler.

4. The optical system of claim 2 wherein the first polish angle comprises an angle of approximately 36 degrees to the horizontal fibre and in contact with a fibre core and the second polish angle comprises an angle of approximately 8 degrees to the horizontal fibre and in contact with grating.

5. The optical system of any preceding claim wherein the value of the second polish angle and the length of that angle along the surface of the device is set at a distance between the fibre core and a grating to define a working distance.

6. The optical system of claim 5 wherein the coupling loss is dependent on the distance between the fibre core and grating.

7. The optical system of claim 5 or 6 wherein the working distance is selected to be approximately below 10 microns, such that the coupling loss becomes negligible during operation.

8. The optical system of any preceding claim wherein the photonic device comprises a grating.

9. The optical system of any preceding claim wherein said coupling uses a bead of epoxy to affix the fiber or fibre array assembly to said device.

10. The optical system claim 9 wherein the epoxy is applied such that the epoxy spreads using capillary action in a gap formed between the fiber or fibre array assembly and a face of the photonic device and capillary action avoids epoxy contamination of the first polish surface

11. The integrated planar optical system of claims 9 or 10 wherein the properties of the epoxy are selected such that the system acts as a filter with specific optical characteristics.

12. The integrated planar optical system of any of claims 9 to 11 wherein the epoxy is cured using UV light.

13. An integrated quasi-planar optical system comprising:
an optical waveguide core adapted at one end to couple to a photonic device;
**characterised in that**:
the one end of the optical waveguide is shaped with a double polish angle, wherein the waveguide end is polished at a first polish angle and polished at a second polish angle to form an irregular angled waveguide tip for coupling with the photonic device.

14. A method of integrating a quasi-planar optical system comprising the steps of:
coupling an optical fibre adapted at one end to couple to a photonic device;
**characterised in that:**
shaping the one end of the optical fibre with a double polish angle, wherein the fibre end is polished at a first polish angle and polished at a second polish angle to form an irregular angled fibre tip for coupling with the photonic device.
